# EUROPEAN PATENT APPLICATION

(11) **EP 1 912 084 A1**
(43) Date of publication of application: **16.04.2008**
(21) Application number: 07019801.5
(22) Date of filing: 10.10.2007
(51) Int. Cl.: G02B 6/00, F21V 8/00

(54) **Pattern forming ink, method for fabricating the same and light guide plate, light emitting unit and liquid crystal display having the same**

(30) Priority: 10.10.2006 KR 20060098564
(71) Applicant: Samsung Electronics Co., Ltd., Yeongtong-gu Suwon-city, Gyeonggi-do 442-742 (KR)
(72) Inventor: Kim, Tae-Hyung, Suwon-si Gyeonggi-do (KR); Lee, Jeoung-Gwen, Suwon-si Gyeonggi-do (KR)
(74) Representative: Weitzel, Wolfgang

(57) **Abstract**

A pattern forming ink includes a polymer resin including acrylic-based resin, a crosslinking agent including hexamethylenediisocyanate, and a filler. The pattern forming ink is printed as a reflection pattern on a light guide plate. Light incident to the reflection pattern is reflected and scattered towards an emission surface of the light guide plate. The light guide plate is connected to a light generator in a light emitting unit. The light emitting unit may be connected to a liquid crystal panel in a liquid crystal display, which displays an image by receiving the light generated from the light emitting unit.

## Description

### CROSS-REFERENCE TO RELATED APPLICATION

This application claims priority from and the benefit of Korean Patent Application No. 10-2006-0098564, filed on October 10, 2006, which is hereby incorporated by reference for all purposes as if fully set forth herein.

### BACKGROUND OF THE INVENTION

### [0002] FIELD OF THE INVENTION

The present invention relates to ink, and more particularly, to ink used to form a pattern, a method for fabricating the ink, a light guide plate whereon the pattern is formed by using the ink, a light emitting unit having the light guide plate, and a liquid crystal display having the light emitting unit.

### [0004] DISCUSSION OF THE BACKGROUND

A display apparatus may be classified as an emissive display apparatus or a non-emissive display apparatus. The non-emissive display apparatus includes a liquid crystal display, which includes a light emitting unit to generate light. The liquid crystal display is small and light, and the demand for liquid crystal displays is increasing. As a result, the light emitting unit, which generates the light to display the image, has become more important.

The light emitting unit may provide light having sufficient brightness, and the brightness may be distributed over the whole area of a screen that displays the image. The light emitting unit includes a pattern formed by using ink. Such conditions of the light emitting unit, including the brightness and the extent to which light is uniformly distributed over the display, may depend on the components of the ink.

### SUMMARY OF THE INVENTION

This invention provides pattern forming ink including components to reflectively scatter light.

The present invention also provides a method for fabricating the pattern forming ink.

The present invention also provides a light guide plate whereon a reflection pattern is formed by printing the pattern forming ink.

The present invention also provides a light emitting unit having the light guide plate installed therein.

The present invention also provides a liquid crystal display having the light emitting unit.

Additional features of the invention will be set forth in the description which follows, and in part will be apparent from the description, or may be learned by practice of the invention.

The present invention discloses a pattern forming ink. The pattern forming ink includes a polymer resin including an acrylic-based resin, a cross-linking agent including hexamethylenediisocyanate, and a filler.

The present invention also discloses a method for fabricating a pattern forming ink including preparing a mixture solution by mixing polymer resin including acrylic-based resin, a cross-linking agent including hexamethylenediisocyanate, and a filler with a solvent, and stirring the mixture solution.
The present invention also discloses a light guide plate including a receiving surface to receive light, an emitting surface to emit light, and a lower surface opposite to the emitting surface and including a reflection pattern to scatter and reflect the light. The reflection pattern includes an ink. The ink includes a polymer resin including an acrylic-based resin, a cross-linking agent including hexamethylenediisocyanate, and a filler.

The present invention also discloses a light emitting unit including a light generator including a light source, and a light guide plate receiving a light supplied by the light generator to emit the light. The the light guide plate includes a receiving surface to receive the light, an emitting surface to emit the light, and a lower surface opposite to the emitting surface and comprising a reflection pattern to scatter and reflect the light. The reflection pattern includes an ink. The ink includes a polymer resin including an acrylic-based resin, a cross-linking agent, and a filler.

The present invention also discloses a liquid crystal display including a light generator including a light source, a light guide plate receiving a light supplied by the light generator to emit the light, and a liquid crystal panel arranged on an upper surface of the light guide plate to display an image using the emitted light. The light guide plate includes a receiving surface to receive the light, an emitting surface to emit the light, and a lower surface opposite to the emitting surface and comprising a reflection pattern to scatter and reflect the light. The reflection pattern includes an ink. The ink includes a polymer resin including an acrylic-based resin, a cross-linking agent including hexamethylenediisocyanate, and a filler.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is an exploded perspective view of a liquid crystal display according to an exemplary embodiment of the present invention.

FIG. 2 is an exploded perspective view illustrating a portion of the liquid crystal panel shown in FIG. 1.

FIG. 3 is an exploded perspective view of the light emitting unit shown in FIG. 1.

FIG. 4 is a section view illustrating a portion of the light guide plate shown in FIG. 3.

FIG. 5A, FIG. 5B, FIG. 5C, FIG. 5D, FIG. 5E, FIG. 5F, and FIG. 5G are microscopic photographs taken after printing pattern forming ink.

FIG. 6A, FIG. 6B, and FIG. 6C are views of a method for fabricating pattern forming ink according to another exemplary embodiment of the present invention.

### DETAILED DESCRIPTION OF THE ILLUSTRATED EMBODIMENTS

The invention is described more fully hereinafter with reference to the accompanying drawings, in which exemplary embodiments of the invention are shown. This invention may, however, be embodied in many different forms and should not be construed as limited to the exemplary embodiments set forth herein. Rather, these exemplary embodiments are provided so that this disclosure is thorough, and will fully convey the scope of the invention to those skilled in the art. In the drawings, the size and relative sizes of layers and regions may be exaggerated for clarity. Like reference numerals in the drawings denote like elements

It will be understood that when an element or layer is referred to as being "on" or "connected to" another element or layer, it can be directly on or directly connected to the other element or layer, or intervening elements or layers may be present. In contrast, when an,element is referred to as being "directly on" or "directly connected to" another element or layer, there are no intervening elements or layers present.

Hereinafter, exemplary embodiments of the present invention will be explained in detail with reference to the accompanying drawings.

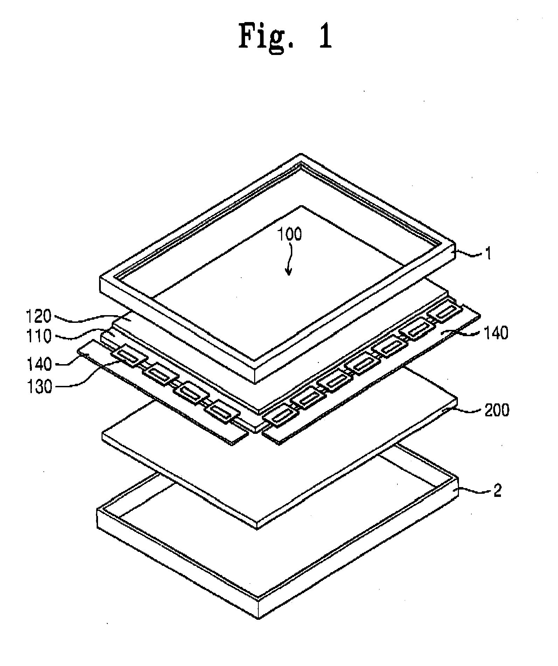

FIG. 1 is an exploded perspective view of a liquid crystal display according to an exemplary embodiment of the present invention.

Referring to FIG. 1, the liquid crystal display includes a top chassis 1, a liquid crystal panel 100, a light emitting unit 200, and a receiving case 2. The liquid crystal panel 100 displays an image, and includes a first substrate 110 connected to a second substrate 120, A printed circuit board 140 is connected to the first substrate 110 through tape carrier packages 130. The printed circuit board 140 may include a driving chip (not shown). A signal for the operation of the liquid crystal display is transmitted to the first substrate 110 from the printed circuit board 140 and the driving chip.

The receiving case 2 has an opened top surface to include a receiving space. The peripheral portion of the receiving case 2 supports the light emitting unit 200 and the liquid crystal panel 100. In addition, the top chassis 1 is connected to the peripheral portion of the receiving case 2. An image display area of the liquid crystal panel 100 is exposed through the top chassis 1. The top chassis 1 covers the peripheral portion of the liquid crystal panel 100 to fix the position of the liquid crystal panel 100, and prevents the printed circuit board 140 from being exposed to the exterior. The light emitting unit 200 is received in the receiving space of the receiving case 2. The light emitting unit 200 generates light and emits the light to the liquid crystal panel 100. Then, the image is displayed as the light passes through the liquid crystal panel 100.

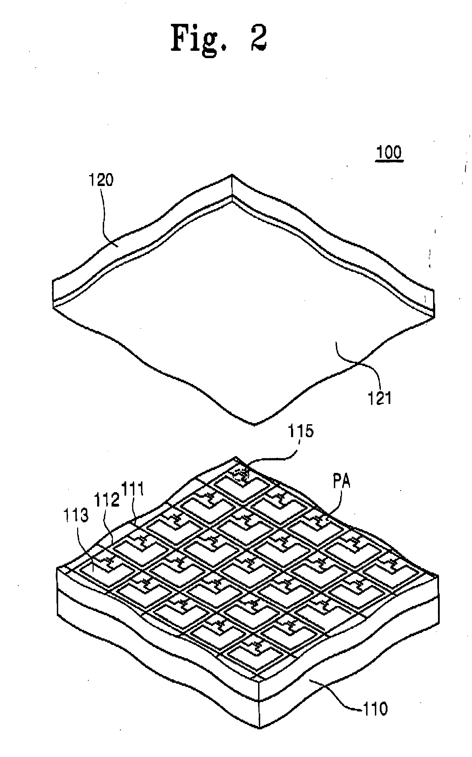

FIG. 2 is an exploded perspective view illustrating a portion of the liquid crystal panel shown in FIG. 1.

Referring to FIG. 2, the liquid crystal panel 100 includes the first substrate 110 and the second substrate 120 that are opposite to each other. A liquid crystal layer (not shown) including liquid crystals is interposed between the first substrate 110 and the second substrate 120. Gate lines 111 and data lines 112 are arranged on the first substrate 110. The gate lines 111 cross with and are insulated from the data lines 112 to define pixel areas PA. Each pixel area PA includes a pixel electrode 113 connected to a thin film transistor 115. The second substrate 120 includes a common electrode 121 facing the pixel electrodes 113.

During the operation of the liquid crystal display, gate signals and data signals are applied to the gate lines 111 and the data lines 112, respectively. A thin film transistor 115 is turned on by a gate signal to transmit a data signal to the pixel electrode 113, so that a data voltage corresponding to image information is applied to the pixel electrode 113. Moreover, a common voltage is applied to the common electrode 121, and an electric field is generated by the voltage difference between the data voltage and the common voltage to be applied to the liquid crystals in the liquid crystal layer.

The alignment of the liquid crystals in the liquid crystal layer changes in response to the electric field, and light transmittance through the liquid crystal layer varies according to the alignment of the liquid crystals. Thus, the alignment of the liquid crystals is controlled by adjusting the electric field, and an image corresponding to the alignment of the liquid crystals is displayed.

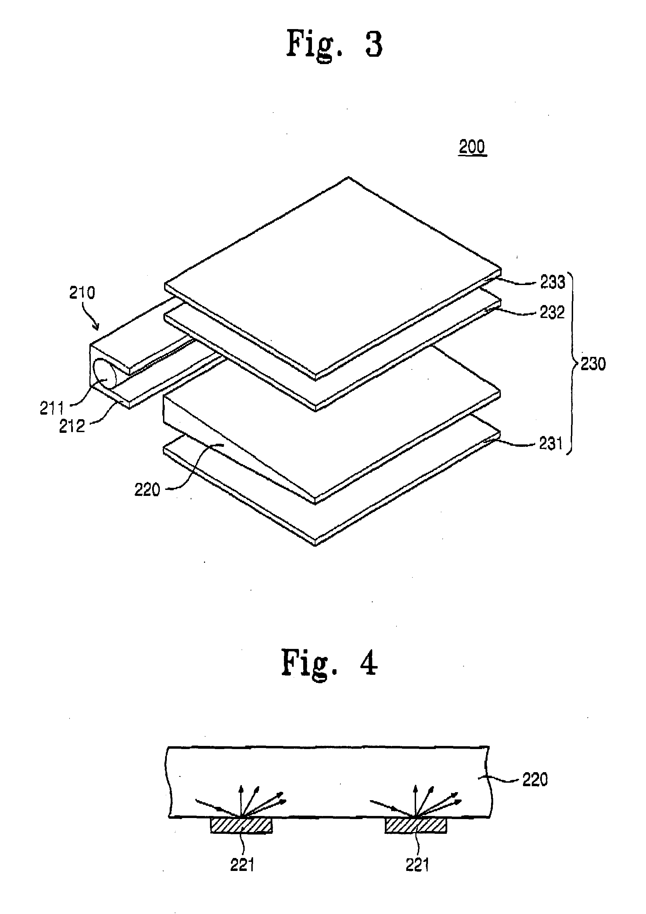

FIG. 3 is an exploded perspective view of the light emitting unit shown in FIG. 1. Although FIG. 3 shows the light emitting unit 200 used in the liquid crystal display, this is illustrative purposes only, and the present invention is not limited thereto. Therefore, a light emitting unit according to the present embodiment can be applied to other types of display apparatuses.

Referring to FIG. 3, the light emitting unit 200 includes a light generator 210, a light guide plate 220, and an optical member 230. The light generator 210 includes a light source 211 and a lamp reflection plate 212. The light source 211 may be a light emitting diode having a point light source or a lamp having a line light source. The lamp reflection plate 212 surrounds the light source 211 except for an opened portion at one side thereof. The lamp reflection plate 212 reflects the light generated from the light source 211 towards the opened portion.

The light generator 210 is connected to the light guide plate 220 at or near the opened portion thereof. The light guide plate 220 guides the light generated from the light generator 210 towards the liquid crystal panel 100 arranged above the light emitting unit 200. The light guide plate 220 has an upper surface through which the light is emitted, and a lower surface facing the upper surface. The lower surface may be inclined at a predetermined angle. Therefore, the light guide plate 220 may become thinner farther from the light generator 210, so that the light is more uniformly emitted from the upper surface of the light guide plate 220 towards the liquid crystal panel 100.

The optical member 230 includes a reflection plate 231, a diffusion plate 232, and a light collecting plate 233. Light emitted away from the liquid crystal panel 100 is reflected back by the reflection plate 231. The diffusion plate 232 diffuses the light emitted from the light guide plate 220 so that the light is more uniformly scattered. The light collecting plate 233 collects the light emitted in a forward direction towards the liquid crystal panel 100.

FIG. 4 is a section view illustrating a portion of the light guide plate shown in FIG. 3.

Referring to FIG. 4, a reflection pattern 221 is arranged on the lower surface of the light guide plate 220. The reflection pattern 221 causes the scattered reflection of the light. That is, the light incident onto the reflection pattern 221 is reflected in various directions to be more evenly scattered. The light emitted from the light guide plate 220 after being reflected from the reflection plate 231 may have a lower brightness vertical to the light guide plate 220 if the traveling direction of the light is significantly oblique with respect to the top surface of the light guide plate 220. The reflection pattern 221 changes the path of the reflected light to emit the reflected light in a direction more substantially orthogonal to the top surface of the light guide plate 220.

The reflection pattern 221 is formed by printing and drying pattern forming ink on the lower surface of the light guide plate 220. When printing the pattern forming ink, the reflection pattern 221 can have various shapes such as circular, rectangular and hexagonal shapes. The degree to which reflected light is scattered and the brightness of the reflected light may vary according to components of the pattern forming ink. Hereinafter, the components of the ink will be described.

The pattern forming ink includes polymer resin, a cross-linking agent, and a filler. The polymer resin and the cross-linking agent adhere the pattern forming ink to the light guide plate 220. The filler scatters the light to improve the brightness of the light reflected from the reflecting pattern 221.

Polyester, polycarbonate (PC), vinyl, polyurethane (PU), and acrylic-based resin may be used as the polymer resin. Polymethylmethacrylate (PMMA) can be used as the acrylic-based resin. The cross-linking agent links the molecules of the polymer resin together. Melamine, toluene diisocyanate (TDI), methylene diisocyanate (MDI) and hexamethylenediisocyanate (HDI) may be used as the cross-linking agent.

Since the pattern forming ink is adhered to the light guide plate 220 by the polymer resin, the suitability of a polymer resin may be evaluated by performing an adhesive property test. Table 1 shows a result of the adhesive property experiment that was performed using various test inks prepared with various components by combining the above materials. After forming one hundred cells, each having a size of 1 mm × 1 mm, on a light guide plate 220 by printing the test inks, the adhesive property test was performed by attaching a tape to the cell and then detaching the tape from the cell. The adhesive property of the test ink was evaluated according to the number of cells remaining after the tape was detached. The test ink was evaluated as a fault if at least one cell was detached. Table 1 indicates the number of cells remaining after the tape was detached for the test inks.

**<Table 1>**

| | | cells remaining after adhesive property test | | | | |
|---|---|---|---|---|---|---|
| | | vinyl | polyester | PMMA | PC | PU |
| cross-linking agent | melamine | 100 | 70 | 100 | 20 | 100 |
| | TDI | 100 | 80 | 100 | 60 | 100 |
| | MDI | 100 | 80 | 100 | 40 | 100 |
| | HDI | 100 | 90 | 100 | 40 | 100 |

Referring to Table 1, the polyester and the polycarbonate have insufficient adhesive properties, but the vinyl, the acrylic-based resin, and the polyurethane have better adhesive properties and may be appropriate for the polymer resin. The vinyl and the polyurethane may change colors when exposed to the light for an extended time. More specifically, a yellowing phenomenon may occur in the vinyl and the polyurethane. Accordingly, the PMMA may be more appropriate for use as the polymer resin included in the pattern forming ink.

Similar to the polymer resin, the suitability of cross-linking agents may be evaluated by performing the adhesive property test. Table 2 shows a result of the adhesive property experiment for test inks in which PMMA having various molecular weights was used as the polymer resin, and melamine, TDI, MDI and HDI were used as the cross-linking agent.

This test was performed in the same manner as the test for selecting the PMMA. After forming one hundred cells, each having a size of 1mm x 1mm, on the light guide plate 220 by using the test ink, the adhesive property test was performed by attaching a tape to the cell and then detaching the tape from the cell. The adhesive property of the test ink was evaluated as 'fault' if at least one cell was detached, and evaluated as 'good' if there was no detached cell.

**<Table 2>**

| | | polymer resin (PMMA) molecular weight | | | | |
|---|---|---|---|---|---|---|
| | | 10,000 | 30,000 | 50,000 | 70,000 | 100,000~ |
| cross-linking agent | melamine | fault | fault | fault | fault | fault |
| | TDI | fault | fault | fault | fault | fault |
| | MDI | fault | fault | fault | fault | fault |
| | HDI | good | good | good | fault | fault |

Referring to Table 2, the melamine, the TDI, and the MDI have insufficient adhesive force to form the pattern forming ink. The melamine, the TDI and the MDI have insufficient adhesive force because the melamine, the TDI and the MDI may not perform a chemical reaction at a low temperature. To the contrary, the HDI exhibits sufficient adhesive force according to the molecular weight of the PMMA. Specifically, the HDI exhibits sufficient adhesive force to form the pattern forming ink when the PMMA has a molecular weight of about 10,000 to about 50,000. If the molecular weight of the PMMA is larger, the adhesive force may decrease due to crystallization thereof. Accordingly, the PMMA having an appropriate molecular weight may be used as the polymer resin, and the HDI may be used as the cross-linking agent.

The filler is filled in the voids of the pattern forming ink. The light scattering degree may vary according to material quality and surface shape of the filler. The filler exerts influence on the reflectability of the pattern forming ink according to the material, size and shape thereof.

For example, the characteristics of the pattern forming ink may be evaluated where the filler is formed of materials such as amorphous silica material, amorphous calcium carbonate material, or spherical acrylic beads material. Further, the sizes of these materials may influence the brightness of light reflected by the pattern forming ink.

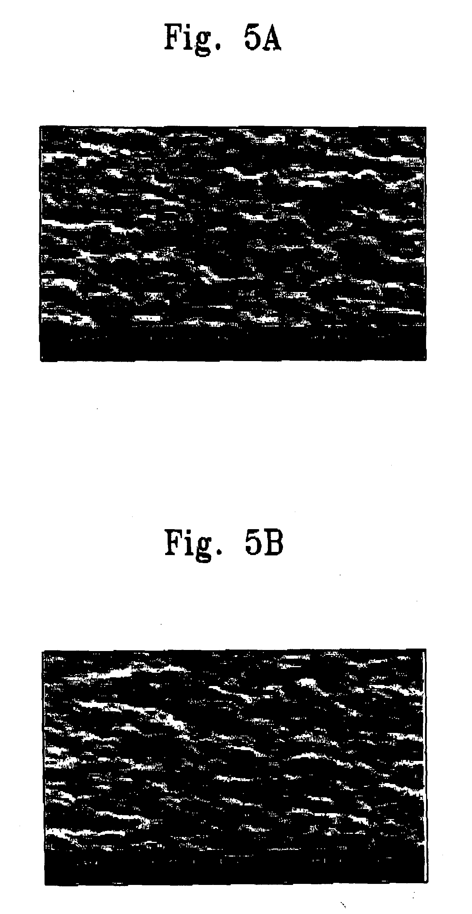

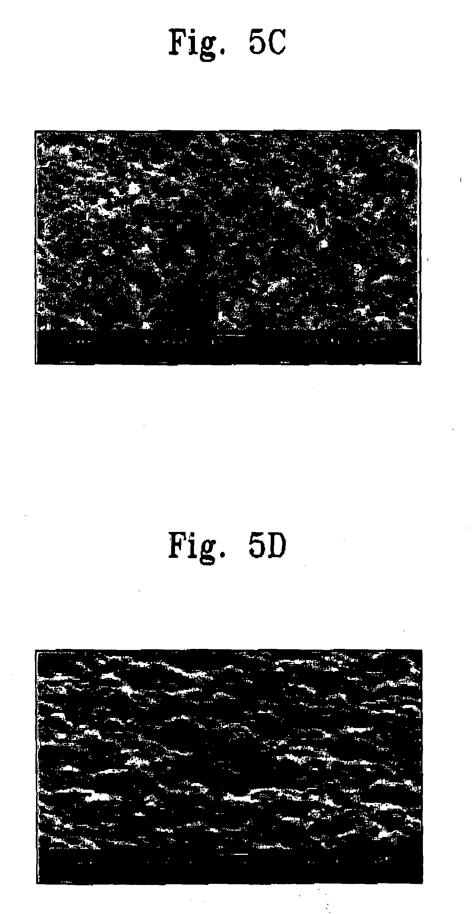

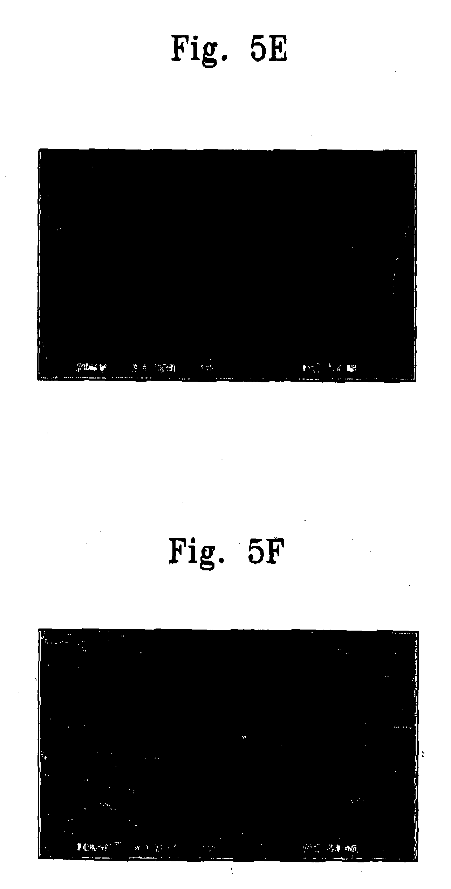

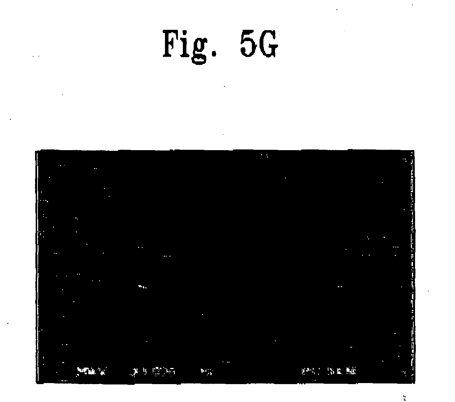

FIG. 5A, FIG. 5B, FIG. 5C, FIG. 5D, FIG. 5E, FIG. 5F, and FIG. 5G are microscopic photographs taken after printing pattern forming ink. Hereinafter, the pattern forming inks corresponding to FIG. 5A, FIG. 5B, FIG. 5C, FIG. 5D, FIG. 5E, FIG. 5F, and FIG. 5G will be referred to as sample 1 (S1), sample 2 (S2), sample 3 (S3), sample 4 (S4), sample 5 (S5), sample 6 (S6), and sample 7 (S7), respectively.

Referring to FIG. 5A, sample 1 (S1) is a photograph taken using the filler having amorphous silica material and having a size of about 2 µm.

Referring to FIG. 5B, sample 2 (S2) is a photograph taken using the filler having amorphous silica material and having a size of about 3 µm.

Referring to FIG. 5C, sample 3 (S3) is a photograph taken using the filler having amorphous calcium carbonate material and having a size of about 1 µm.

Referring to FIG. 5D, sample 4 (S4) is a photograph taken using the filler having amorphous silica material and having a size of about 2 µm.

Referring to FIG. 5E, sample 5 (S5) is a photograph taken using the filler having amorphous silica material and having a size of about 2 µm.

Referring to FIG. 5F, sample 6 (S6) is a photograph taken using the filler having spherical acrylic beads material and having a size of about 5 µm.

Referring to FIG. 5G, sample 7 (S7) is a photograph taken using the filler having spherical sharp acrylic beads material and having a size of about 5 µm.

Various sample inks having the above-listed materials as the filler are manufactured by using the PMMA as the polymer resin and the HDI as the cross-linking agent. The sample inks are printed on the entire lower surface of the light guide plate 220. At this step, the reflection pattern 221 using the sample inks is not fabricated because the sample inks are printed on the entire lower surface of the light guide plate 220 and not in a pattern for the purpose of the test. The transmittance and the haze were measured by using each light guide plate 220 where the sample inks were printed on the entire lower surface in various thicknesses. Table 3 shows an experimental measurement result according to the various sample inks.

**<Table 3>**

| sample | thickness(µm) | transmittance(%) | haze(%) |
|---|---|---|---|
| S1 | 8-9 | 96 | 91 |
| S2 | 8-9 | 95 | 86 |
| S3 | 11-13 | 56 | 99 |
| S4 | 8-9 | 96 | 90 |
| S5 | 8-9 | 70 | 98 |
| S6 | 8-9 | 95 | 92 |
| S7 | 8-9 | 94 | 97 |

Referring to Table 3, the transmittance of light may be at least 95%, and the samples satisfying such conditions include sample 1 (S1), sample 2 (S2), sample 4 (S4), and sample 6 (S6), The haze shows the degree of the light scattered by the sample inks printed on the lower surface of the light guide plate 220, and if the haze value becomes larger, the light is scattered more uniformly. The haze may be at least 90%, and the samples satisfying such conditions include sample 1 (S1), sample 3 (S3), sample 4 (S4), sample 5 (S5), sample 6 (S6), and sample 7 (S7). Accordingly, the samples satisfying the minimum light transmittance and haze conditions include sample 1 (S1), sample 4 (S4), and sample 6 (S6).

The reflection pattern 221 was formed on the lower surface of the light guide plate 220 by using the selected sample 1 (S1), sample 4 (S4), and sample 6 (S6). Then, the liquid crystal panel 100 was arranged on the light guide plate 220 having the reflection pattern in order to measure the brightness of the liquid crystal panel 100. The brightness was measured at 9 points or 25 points across the entire surface of the liquid crystal panel. According to the measurement result, the sample 6 (S6) shows the superior result.

Table 4 shows the comparative result of the brightness between the conventional liquid crystal panel as the reference (Ref) and the liquid crystal panel 100 having the reflection pattern 221 using sample 6 (S6).

**<Table 4>**

| | center(cd/m²) | 9point uniformity(%) | 9point average(cd/m²) | 25point average(cd/m²) | brightness increase |
|---|---|---|---|---|---|
| Ref | 5500 | 85.0 | 4978 | 4928 | 7% |
| S6 | 5780 | 88.5 | 5323 | 5260 | |

Referring to Table 4, the measured brightness of the sample 6 (S6) in the center is greater than that of the reference (Ref) by approximately 280 cd/m². In addition, when measuring the brightness at 9 point of each liquid crystal panel, the measured brightness of the sample 6 (S6) is greater than that of the reference (Ref) by 345 cd/m² on average, and the uniformity of the sample 6 (S6) is better than that of the reference (Ref). Particularly, when measuring the brightness at 25 point of each liquid crystal panel, the measured brightness of the sample 6 (S6) is greater than that of the reference (Ref) by 332 cd/m², As a result, the measured brightness of the sample 6 (S6) is increased by about 7% over the reference (Ref).

As shown in Table 1, Table 2, Table 3, and Table 4, the sample 6 (S6) may be used as the pattern forming ink. Therefore, the pattern forming ink includes the polymer resin, the cross-linking agent, and the filler. The PMMA having the molecular weight of about 10,000 to about 50,000 is used as the polymer resin, the HD1 is used as the cross-linking agent, and the spherical acrylic beads having a diameter of about 4 µm to about 6 µm are used as the filler. Additionally, the reflection pattern 221 formed by printing the pattern forming ink may have a thickness of about 8 µm to about 9 µm.

Hereinafter, a method of fabricating the pattern forming ink including the above-mentioned components will be described.

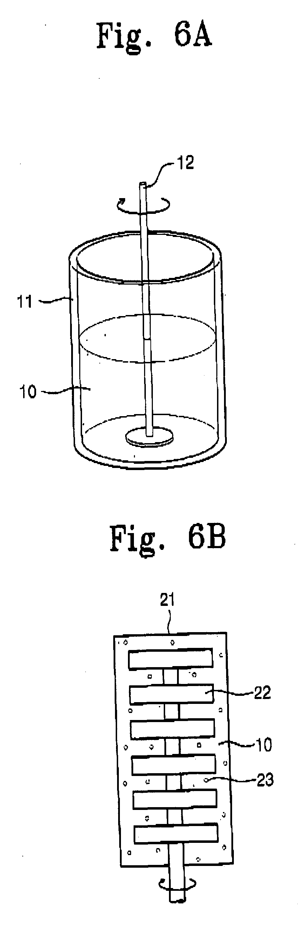

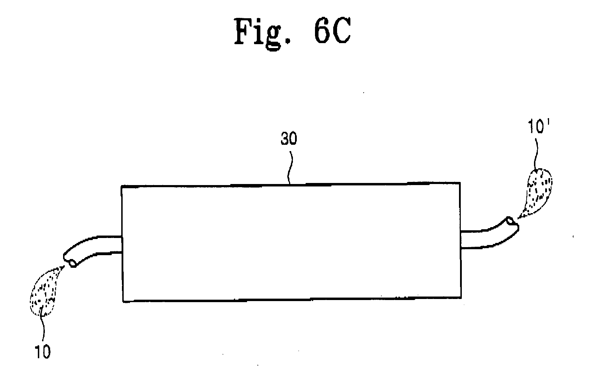

FIG. 6A, FIG. 6B, and FIG. 6C are views of a method for fabricating a pattern forming ink according to another exemplary embodiment of the present invention.

Referring to FIG. 6A, a mixture solution 10 is prepared by mixing a polymer resin, a cross-linking agent, and a filler in a first container 11 with a solvent. PMMA having chemical formula 1 as follows may be used as the polymer resin.

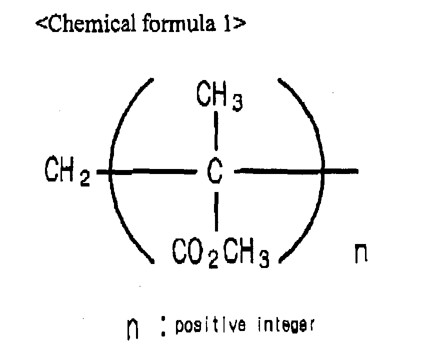

The molecular weight of the PMMA in the chemical formula 1 varies according to the variable n. The variable n may be selected such that the PMMA has the molecular weight of about 10,000 to about 50,000.

HDI having chemical formula 2 as follows may be used as the cross-linking agent.

<Chemical formula 2> O=C=N-(CH₂)-N=C=O

Spherical acrylic beads having a diameter of about 4 µm to about 6 µm may be used as the filler. Particularly, the acrylic beads may be formed of a compound having chemical formula 3 as follows.

<Chemical formula 3> -CH₂-CR1CO₂R2-

R1 and R2 in chemical formula 3 may be alkyl groups

The solvent is used for mixing the PMMA, the HDI, and the acrylic beads as the filler. Dimethylether having chemical formula 4 as follows or cyclohexanone having chemical formula 5 as follows can be used as the solvent.

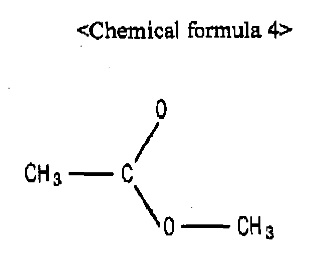

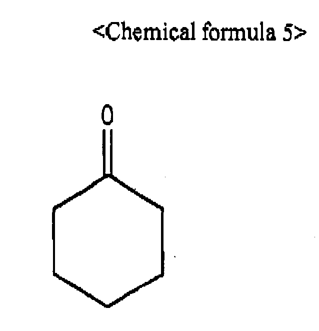

The polymer resin, the cross-linking agent, the filler, and the solvent are mixed at a proper mixture ratio. In the mixture solution 10, the polymer resin may have a weight ratio of about 25 to about 30, the cross-linking agent may have a weight ratio of about 4 to about 6, and the filler may have a weight ratio of about 36 to about 42. The remaining portion of the mixture solution 10 may be the solvent, which corresponds to a weight ratio of about 25 to about 33. The weight ratio of the polymer resin and the filler may be selected according to adhesive force and optical characteristics such light transmittance. The weight ratio of the cross-linking agent may be selected according to adhesive force, durability and solidity. The weight ratio of the solvent may be selected such that the ink has appropriate viscosity and can be easily printed when the pattern is formed.

When the mixture solution 10 is prepared, a first stirring wing 12 provided in the first container 11 is rotated to stir all components in the mixture solution 10 during a first stirring operation.

Referring to FIG. 6B, the mixture solution 10 is introduced into a second container 21. A second stirring wing 22 provided in the second container 21 is rotated to stir the mixture solution 10 during a second stirring operation. During the second stirring operation, auxiliary particles 23 may be introduced into the second container 21, and are stirred together with the mixture solution 10. Glass beads or girconium beads may be used as the auxiliary particles 23. Due to the second stirring operation, the auxiliary particles 23 collide with the filler in the mixture solution 10, thereby dispersing the filler in the mixture solution 10.

Referring to FIG. 6C, the mixture solution 10 is introduced into a tank 30. The mixture solution 10 may be filtered while passing through the tank 30 to form a filtered mixture solution 10'. In the filtering process, various impurities may be removed from the mixture solution 10. The pattern forming ink can be obtained from the filtered mixture solution 10'.

As described above, the pattern forming ink according to the exemplary embodiments has a high adhesive property. In addition, the light emitting unit 220 having the reflection pattern 221 formed of the pattern forming ink and the liquid crystal display having the same may have improved brightness, so that a high-quality image can be displayed.

If the brightness characteristic of a liquid crystal display is low, a high voltage may be applied to the light generator in order to generate light having a higher brightness, but this may decrease the life span of a light generator. If the brightness is improved without applying a higher voltage to the liquid crystal display, the life span of the light emitting unit and the liquid crystal display may be increased. The present invention uses the reflection pattern to improve the brightness without having to apply a high voltage to the light generator 210. Thus, the life span of the light emitting unit 200 and the liquid crystal display may be increased.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

## Claims

1. A pattern forming ink, comprising:
a polymer resin comprising an acrylic-based resin;
a cross-linking agent comprising hexamethylenediisocyanate; and
a filler.

2. The pattern forming ink of claim 1, wherein the acrylic-based resin comprises polymethylmethacrylate having a molecular weight of about 10,000 to about 50,000.

3. The pattern forming ink of claim 1, wherein the filler comprises acrylic beads.

4. The pattern forming ink of claim 3, wherein the acrylic beads comprise a compound having a chemical formula as follows:
<Chemical formula> -CH₂-CR1CO₂R2-
wherein R1 and R2 are alkyl groups.

5. The pattern forming ink of claim 3, wherein the acrylic beads have a spherical shape having a diameter of about 4 µm to about 6 µm.

6. A method for fabricating a pattern forming ink, comprising:
preparing a mixture solution by mixing polymer resin comprising an acrylic-based resin, a cross-linking agent comprising hexamethylenediisocyanate, and a filler with a solvent; and stirring the mixture solution.

7. The method of claim 6, wherein stirring the mixture solution comprises:
performing a first stirring operation on the mixture solution;
adding auxiliary particles to the mixture solution; and
performing a second stirring operation on the mixture solution including the auxiliary particles.

8. The method of claim 6, wherein the solvent comprises dimethylether or cyclohexanone.

9. The method of claim 6, wherein the mixture solution comprises the polymer resin having a weight ratio of about 25 to about 30, the cross-linking agent having a weight ratio of about 4 to about 6, the filler having a weight ratio of about 36 to about 42.

10. The method of claim 6, further comprising filtering the stirred mixture solution.

11. A light guide plate, comprising:
a receiving surface to receive light;
an emitting surface to emit the light; and
a lower surface opposite to the emitting surface, and comprising a reflection pattern to scatter and reflect the light,
wherein the reflection pattern comprises an ink comprising:
a polymer resin comprising an acrylic-based resin;
a cross-linking agent comprising hexamethylenediisocyanate; and
a filler.

12. The light guide plate of claim 11, wherein the acrylic-based resin comprises polymethylmethacrylate having a molecular weight of about 10,000 to about 50,000.

13. The light guide plate of claim 11, wherein the filler comprises acrylic beads.

14. The light guide plate of claim 13, wherein the acrylic beads comprise a compound having a chemical formula as follows:
<Chemical formula> -CH₂-CR1CO₂R2-
wherein R1 and R2 are alkyl groups

15. The light guide plate of claim 13, wherein the acrylic beads have a spherical shape having a diameter of about 4 µm to about 6 µm.

16. A light emitting unit, comprising:
a light generator comprising a light source; and
a light guide plate receiving a light supplied by the light generator to emit the light, the light guide plate comprising a receiving surface to receive the light, an emitting surface to emit the light; and a lower surface opposite to the emitting surface and comprising a reflection pattern to scatter and reflect the light,
wherein the reflection pattern comprises ink comprising:
a polymer resin comprising acrylic-based resin;
a cross-linking agent; and
a filler.

17. The light emitting unit of claim 16, wherein the acrylic-based resin comprises polymethylmethacrylate having a molecular weight of about 10,000 to about 50,000.

18. The light emitting unit of claim 16, wherein the cross-linking agent comprises hexamethylenediisocyanate.

19. The light emitting unit of claim 16, wherein the filler comprises acrylic beads.

20. The light emitting unit of claim 16, wherein the ink has a thickness of about 8 µm to about 9 µm.

21. A liquid crystal display, comprising:
a light generator comprising a light source;
a light guide plate receiving a light supplied by the light generator to emit the light, the light guide plate comprising a receiving surface to receive the light, an emitting surface to emit the light; and a lower surface opposite to the emitting surface and comprising a reflection pattern to scatter and reflect the light; and
a liquid crystal panel arranged on an upper surface of the light guide plate to display an image using the emitted light,
wherein the reflection pattern comprises ink comprising:
a polymer resin comprising an acrylic-based resin;
a cross-linking agent comprising hexamethylenediisocyanate; and
a filler.

22. The liquid crystal display of claim 21, wherein the acrylic-based resin comprises polymethylmethacrylate having a molecular weight of about 10,000 to about 50,000.

23. The liquid crystal display of claim 21, wherein the filler comprises acrylic beads.

24. The liquid crystal display of claim 23, wherein the acrylic beads comprise a compound having a chemical formula as follows:
<Chemical formula> -CH₂-CR1CO₂R2-
wherein R1 and R2 are alkyl groups.

25. The liquid crystal display of claim 23, wherein the acrylic beads have a spherical shape having a diameter of about 4 µm to about 6 µm.
